# EUROPEAN PATENT APPLICATION

(11) **EP 4 746 086 A1**
(43) Date of publication of application: **20.05.2026**
(21) Application number: 24213438.5
(22) Date of filing: 15.11.2024
(51) Int. Cl.: H01M 8/18

(54) **ELECTROLYTE SOLUTION FOR A BATTERY, USE THEREOF AND BATTERY**

(71) Applicant: Atotech Deutschland GmbH & Co. KG, 10553 Berlin (DE)
(72) Inventor: Hahn, Sebastian, 10553 Berlin (DE); Dück, Roman, 10553 Berlin (DE); Guillén Posteguillo, Carlos, 10553 Berlin (DE)
(74) Representative: MKS IP Association

(57) **Abstract**

The instant invention relates to an electrolyte solution for a battery, the solution comprising an additive selected from the group consisting of polyquaternized polymers; the invention further relates the use of such additive and a battery comprising said additive.

## Description

### Field of the Invention

The instant invention relates to an electrolyte solution for a battery, the solution comprising an additive selected from the group consisting of polyquaternized polymers; the invention further relates the use of such additive and a battery comprising said additive.

### Background of the Invention

ZnBr₂ Redox-Flow Batteries (RFBs) have emerged as a compelling alternative to their Vanadium-based counterparts, capitalizing on the abundance and cost-effectiveness of zinc raw material. However, challenges related to zinc metal deposition during the charging process, such as dendrite formation and their potential growth through the membrane, pose a threat to battery integrity by creating short circuits.

It has been found that the formation of stable and solid Zn layers is preferred: amorphous and/or porous Zn layers typically lead to detachment of small particles which negatively influences the performance.

Additionally, parasitic reactions, including hydrogen formation, negatively influence the performance and require careful consideration.

The state-of-the-art approach to addressing these challenges involves engineering solutions, such as periodic maintenance and downtime cycles.

Other processes comprise the use of additives.

Electrolytes comprising quaternary ammonium reagents are e.g. disclosed in US 10,892,524 and US 2023/0107407. WO 2017/142990 discloses the use of quaternary ammonium salts as halogen sequestration agents. A significant drawback is their reduced solubility and, hence, reduced stability of the electrolyte over numerous charge cycles.

US 2020/0243909 discloses the selective prevention of dendrite formation and of hydrogen evolution side reactions without hindering cell efficiency by usage of quaternary nitrogen and/or quaternary phosphorous compounds substituted with a variety of linear and/or cyclic organic groups.

Despite of the variety in substituents all of the above-mentioned quaternary ammonium compounds are molecules with a relatively low molar mass.

As polymeric compounds in electrolytes, e.g. polyethers are known. Examplarily, WO 2017/142990 discloses dimethyl ether poly(ethylene glycol)s.

US 11,888,164 discloses batteries in which, amongst others, a polymeric halogen sequestering agent is distributed in the cathode active layer, i.e. the polymers are deposited and form part of the electrode. Due to their low solubility they are not dissolved and, hence, do not form part of the electrolyte.

### Objective of the present invention

It was therefore an objective of the present invention to provide a solution, in particular an electrolyte solution, that does not exhibit the above-mentioned disadvantages.

In particular, it was an objective of the present invention to provide a solution that reduces dendritic growth, thereby extending the operational lifespan of ZnBr₂ RFBs.

It was a further objective of the present invention to provide a solution that reduces hydrogen formation during electroplating, contributing to enhanced safety and efficiency.

Concerns within the industry about the stability of additives in oxidative environments over the battery's long life are addressed through meticulous selection, supported by extensive cycle testing. Moreover, the effects of the additives are being verified in an upscaled RFB test setup.

The benefits of these additives position them as essential facilitators for the widespread adoption of redox-flow batteries across various applications, ranging from stationary energy storage to more extensive grid integration efforts. This fosters increased acceptance in the dynamic landscape of sustainable energy solutions.

### Figures

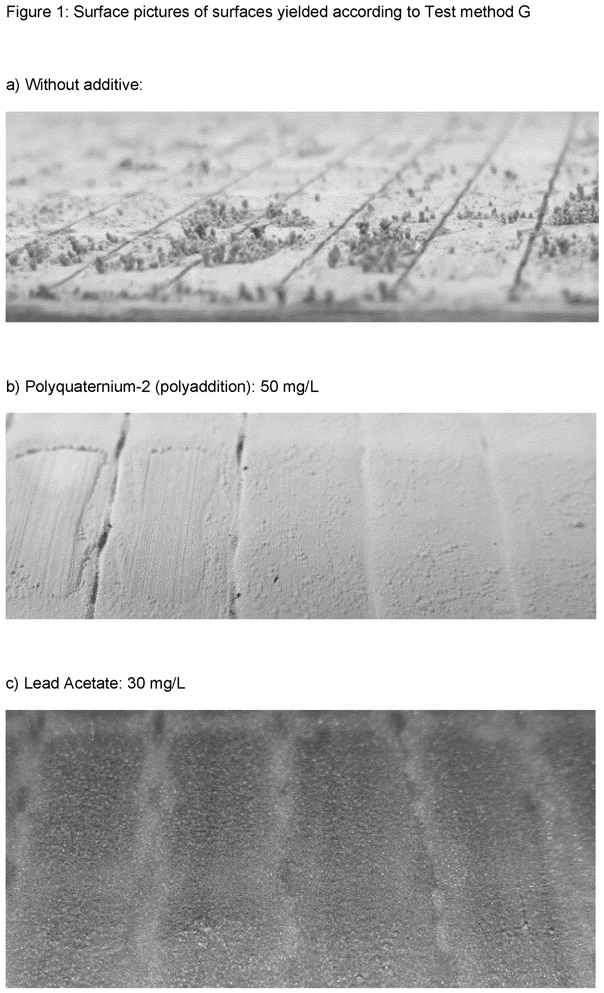

Figure 1 displays photographs of several surfaces that were prepared according to Test method G (see Examples):
   a) was prepared without additive (comparative)
   b) was prepared with polyquaternium-2 (according to the invention)
   c) was prepared with lead acetate (comparative)

### Description of the Invention

Above mentioned objective is solved by the inventive electrolyte solution for a battery, the solution comprising an additive selected from the group consisting of polyquaternized polymers; the invention further relates the use of such additive and a battery comprising said additive.

One embodiment of the instant invention is an electrolyte solution for a battery, the solution comprising at least one additive selected from the group consisting of polyquaternized polymers, preferred selected from the group consisting of polyquaternized polyadducts and/or polyquaternized polycondensates.

In a preferred embodiment of the inventive solution, the battery is a Zn battery.

In another preferred embodiment of the inventive solution, the battery is a redox flow battery.

In a more preferred embodiment of the inventive solution, the battery is a zinc-bromine-redox flow battery.

A further embodiment of the instant invention is the use of an additive for reducing dendrite formation and/or hydrogen formation and/or increasing plating performance in a battery whereas the at least one additive is selected from the group consisting of polyquaternized polymers, preferred selected from the group consisting of polyquaternized polyadducts and/or polyquaternized polycondensates.

Even if the additive for reducing dendrite formation and/or hydrogen formation and/or increasing plating performance is preferredly environmentally benign, it might be necessary for performance reasons to use, in addition to the at least one additive selected from the group consisting of polyquaternized polymers, preferred selected from the group consisting of polyquaternized polyadducts and/or polyquaternized polycondensates, lead containing compounds as additional additives.

In a preferred embodiment of the use, the at least one additive is comprised in the electrolyte solution.

In a preferred embodiment of the inventive use, the battery is a Zn battery.

In another preferred embodiment of the inventive use, the battery is a redox flow battery.

In a more preferred embodiment of the inventive use, the battery is a zinc-bromine-redox flow battery.

A further embodiment of the instant invention is a battery comprising at least one additive selected from polyquaternized polymers, preferred selected from the group consisting of polyquaternized polyadducts and/or polyquaternized polycondensates.

In a preferred embodiment of the battery, the battery according comprises the at least one additive selected from polyquaternized polymers, preferred selected from the group consisting of polyquaternized polyadducts and/or polyquaternized polycondensates, in the electrolyte.

Polyquaternium is the International Nomenclature for Cosmetic Ingredients (INCI) designation for several polycationic polymers that are used in the personal care industry. In polyquaternium polymers quaternary ammonium centers are present in the polymer. INCI has approved at least 40 different polymers under the polyquaternium designation. Different polymers are distinguished by the numerical value that follows the word "polyquaternium". The polymers chemically different type of polymer. The numbers are assigned in the order in which they are registered rather than because of their chemical structure.

Preferred are those polymers that are produced by polyaddition and/or polycondensation, in contrats to those that are produced by radical or ionic chain polymerization. Examples for such polyquaternized polyadducts and/or polyquaternized polycondensates are
- Polyquaternium-1: Ethanol, 2,2',2" -nitrilotris-, polymer with 1,4-dichloro-2-butene and N,N,N',N'-tetramethyl-2-butene-1,4-diamine;
- Polyquaternium-2: Poly[bis(2-chloroethyl) ether-alt-1,3-bis[3-(dimethylamino)propyl]urea];
- Polyquaternium-17 : Adipic acid, dimethylaminopropylamine and dichloroethylether copolymer;
- Polyquaternium-18 : Azelaic acid, dimethylaminopropylamine and dichloroethylether copolymer;
- Polyquaternium-27 : Block copolymer of Polyquaternium-2 and Polyquaternium-17; and
- Polyquaternium-34 : Copolymer of 1,3-dibromopropane and N,N-diethyl-N',N'-dimethyl-1,3-propanediamine.

The additive is provided in a solution, preferredly an aqueous solution. More preferred, water is the only solvent.

Preferredly, the additive concentration in the solution is of from 0.0001 g/L to 250 g/L, preferred of from 0.0001 g/L to 25 g/L, more preferred of from 0.0001 g/L to 2.5 g/L, even more preferred of from 0.0005 g/L to 2.5 g/L. Particularly preferred the additive concentration in the solution is of from 0.0005 g/L to 2.0 g/L, more preferred of from 0.001 g/L to 2.0 g/L, even more preferred of from 0.001 g/L to 1.0 g/L. These concentration ranges are particularly preferred for solutions that are commercially provided ("commercial solutions").

Electrolyte solutions can be directly used from commercial solutions. In the alternative, commercial solutions can be further diluted.

In the following concentration are presented which are particularly preferred for electrolyte solutions.

Particularly preferred the additive concentration in the solution is of from 0.001 g/L to 0.5 g/L, more preferred of from 0.001 g/L to 0.4 g/L, more preferred of from 0.001 g/L to 0.35 g/L, even more preferred of from 0.001 g/L to 0.3 g/L, even more preferred of from 0.001 g/L to 0.2 g/L. Particularly preferred the additive concentration in the solution is of from 0.001 g/L to 0.1 g/L, more preferred of from 0.005 g/L to 0.1 g/L, even more preferred of from 0.01 g/L to 0.1 g/L. Particularly preferred the additive concentration in the solution is of from 0.01 g/L to 0.05 g/L. Most preferred, the additive concentration in the solution is of from 0.01 g/L to 0.025 g/L.

The invention is further explained by the following non-limiting examples.

### Examples

### Measurements:

Several tests have been performed which are described in the following. The respective results are concluded in Table 1.

### A) Br Stability Test

In order to estimate the long-term stability of the additives in the real Br environment, a Br rapid test was carried out. Defined potassium bromide/potassium bromate solution and addition of sulfuric acid is prepared with additive and stored for a defined time. By titration, the iodine index with and without additive is calculated and used to define the stability of the additive in the defined solution.

### B) Electrochemical (EC) Efficiency Test

Electrochemical tests were carried out to demonstrate the effect on hydrogen suppression during plating with and without additives in 0.1 M ZnCI or 0.1 M ZnBr solution. This EC Screening is done in a standard RDE set-up. A rotating disc electrode (e.g., Zn preplated Glassy carbon (GC)) was used to run chronopotentioampery Zn deposition and chrono-amperimetric dissolution of the resulting Zn layer onto the RDE. At a defined rotation of 100 rpm the Zn layer is deposited at 5 A/dm² and dissolved at constant 0.3 V vs. Ag/AgCI (3 M KCI) within 300 rpm. As a counter electrode a Pt rod was used. Test were carried out at room temperature.

### Efficiency/Hydrogen suppression

Hydrogen formation was recognized in situ when hydrogen formation was not suppressed during deposition and the electrochemical current efficiency was decreased.

### C) Plating in real Electrolyte - ZnBr

The influence of the additive was demonstrated by carrying out the deposition in a beaker with and without additive in the electrolyte. A current density of 25 mA/cm² was applied for 30 minutes and the zinc layer was observed optically on the electrode. A commercially available carbon-polymer bipolar plate was used as the electrode and the tests were carried out at room temperature.
ZnBr₂ (2.25 mol/L), ZnCl₂ (0.5 mol/L), 1-Ethyl-1-methylpyrrolidinium bromide (MEP) (0.8 mol/L)

### D) Plating in real Electrolyte - Alkaline Zn

The procedure is the same as described under C), however, with the following components:
ZnO (0.3 mol/L), KOH (1.7 mol/L) and NaOH (1.3 mol/L)

### E) Plating in real Electrolyte (Hull Cell) - Alkaline Zn

The influence of the additives on dendritic growth was demonstrated by deposition on an electrode in a Hull Cell experiment. A steel electrode (10 x 7 cm) was coated with 2 A for 20 min at room temperature. The influence on dendrite growth was demonstrated by comparing deposition with and without the additive. To investigate the stability of the additive, the additive-electrolyte mixture was stored at 60 °C for up to 4 months - after electrolyte preparation and after 8, 12, 16 weeks a sample was taken and a Hull Cell experiment was carried out to show the influence of the additive after storage.
ZnO (0.3 mol/L), KOH (1.7 mol/L) and NaOH (1.3 mol/L)

### F) Plating in real Electrolyte (Hull Cell) - ZnBr

The influence of the additives on dendritic growth was demonstrated by deposition on an electrode in a Hull Cell experiment. A steel electrode (10 x7 cm) was coated with 3 A for 15 min at room temperature. The influence on dendrite growth was demonstrated by comparing deposition with and without the additive.
ZnBr₂ (2.25 mol/L), ZnCl₂ (0.5 mol/L), MEP (0.8 mol/L); pH = 2 (adjusted by HBr). It has been found that a working window of from 2 to 3 delivers best results

### G) Cycle Test in Redox flow cell test set-up

The cycle test was carried out to prove the stability of the additives during the life of the battery. For this purpose, the 4 h zinc was deposited at 25 mA/cm² after a total of at least 30 charging and discharging cycles had been carried out. Charging and discharging was carried out at 25 mA/cm² for 4 h each, a flow cell with an electrode area of 200 cm² and an distance of the electrode to the separator of 2 mm was used. The separator used was a commercially available polyethylene battery separator.
ZnBr₂ (2.25 mol/L), ZnCl₂ (0.5 mol/L), MEP (0.8 mol/L); pH = 2 (adjusted by HBr). It has been found that a working window of from 2 to 3 delivers best results

The amount of HBr to adjust the pH value over time is shown here:

| **Cycle number** | **HBr amount %** | |
|---|---|---|
| | Lead Acetate | Polyquaternium-2 |
| 1 | 0% | 0% |
| 6 | 100% | 60% |
| 11 | 100% | 75% |
| 16 | 100% | 60% |
| 21 | 100% | 60% |
| 26 | 100% | 65% |
| 31 | 100% | 70% |

**Table 1: Results of Tests A to G for different materials**

| **Test** | **A** | **B** | **C** | **D** | **E** | **F** | **G** | **H** | **I** | |
|---|---|---|---|---|---|---|---|---|---|---|
| **Material** | Br stability | EC efficiency | plating result ZnBr | plating result alkaline Zn | Hull Cell alkaline Zn | Hull Cell ZnBr | RFC test ZnBr | Toxicity | Solubility | Example |
| Succinic Acid | + | + | | - | - | | | | + | Comp |
| N,N,N',N'-Tetrakis (2-hydroxypropyl) ethylenediamine | + | - | - | - | - | | - | | + | Comp |
| Nicotinic Acid | + | + | | - | - | | | | + | Comp |
| Lead Acetate | + | + | + | + | + | + | + | | + | Comp |
| PEG6000 | + | + | + | | | + | + | + | + | Comp |
| PEG3000 | + | + | | | | | | + | + | Comp |
| PEG200 | + | + | | | | | | + | + | Comp |
| Polyquaternium-2 (polyaddition) | + | + | + | + | + | + | + | + | + | Inv |
| Tetramethyl Ammonium Hydroxide | + | + | | | | | | -- | + | Comp |
| Benzalkonium Chloride | | + | | | | | | - | + | Comp |
| (1-Hexadecyl)-Trimethyl Ammonium Bromide (CTAB) | - | + | | | | | | - | - | Comp |
| Poly (acrylamide-co-diallyl dimethyl-ammonium chloride) (radical polymerization) | + | - | + | | | + | | | + | Inv |
| Poly (diallyl dimethyl ammonium chloride) (radical polymerization) | + | + | | | | | | | - | Inv |

| | | | | | | | | | | |
|---|---|---|---|---|---|---|---|---|---|---|
| A: + : high stability; - : not stable B: + : Hydrogen formation reduced; - : Hydrogen formation increased C to G : + : deposition improved; - : poor deposition H: + : non-harzardous/non-toxic; - : hazardous; - : toxic I : + : soluble ; - : not soluble Example : Comp : Comparative; Inv : Inventive | | | | | | | | | | |

## Claims

1. An electrolyte solution for a battery, the solution comprising at least one additive selected from the group consisting of polyquaternized polymers, preferred selected from the group consisting of polyquaternized polyadducts and/or polyquaternized polycondensates.

2. The electrolyte solution according to claim 1, whereas the battery is a Zn battery.

3. The electrolyte solution according to claim 1, whereas the battery is a redox flow battery.

4. The electrolyte solution according to claim 2 and claim 3, whereas the battery is a zinc-bromine-redox flow battery.

5. Use of an additive for reducing dendrite formation and/or hydrogen formation and/or increasing plating performance in a battery whereas the at least one additive is selected from the group consisting of polyquaternized polymers, preferred selected from the group consisting of polyquaternized polyadducts and/or polyquaternized polycondensates.

6. The use of an additive according to claim 5, whereas the at least one additive is comprised in the electrolyte solution.

7. The use of an additive according to claim 5 or 6, whereas the battery is a Zn battery.

8. The use of an additive according to claim 6 or 7, whereas the battery is a redox flow battery.

9. The use of an additive according to claim 7 and claim 8, whereas the battery is a zinc-bromine-redox flow battery.

10. A battery comprising at least one additive selected from polyquaternized polymers, preferred selected from the group consisting of polyquaternized polyadducts and/or polyquaternized polycondensates.

11. A battery according to claim 10 comprising the at least one additive selected from polyquaternized polymers, preferred selected from the group consisting of polyquaternized polyadducts and/or polyquaternized polycondensates, in the electrolyte.
